**Europäisches Patentamt**

**European Patent Office**

**Office européen des brevets**

(11) Veröffentlichungsnummer: **0 292 578**
**A1**

## EUROPÄISCHE PATENTANMELDUNG

veröffentlicht nach Art. 158 Abs. 3 EPÜ

(21) Anmeldenummer: **88900262.2**

(22) Anmeldetag: **27.10.87**

Daten der zugrundeliegenden internationalen Anmeldung:

(86) Internationale Anmeldenummer:
**PCT/SU 87/00119**

(87) Internationale Veröffentlichungsnummer:
**WO 88/04822 (30.06.88 88/14)**

(51) Int. Cl.⁴: **G 11 B 7/24**

(30) Priorität: **15.12.86 SU 4157161**

(43) Veröffentlichungstag der Anmeldung: **30.11.88**
**Patentblatt 88/48**

(84) Benannte Vertragsstaaten: **AT BE CH DE FR GB IT LI LU NL SE**

(71) Anmelder: **INSTITUT PROBLEM MODELIROVANIA V ENERGETIKE AKADEMII NAUK UKRAINSKOI SSR, pr. Pobedy, 56, Kiev, 252680 (SU)**

(72) Erfinder: **ANTONOV, Alexandr Alexandrovich, pr. Vernadskogo, 85-64, Kiev, 252142 (SU)**
Erfinder: **PETROV, Vyacheslav Vasilievich, ul. Montazhnikov, 104, Kiev, 252069 (SU)**

(74) Vertreter: **Lehn, Werner, Dipl.-Ing. et al, Hoffmann, Eitle & Partner Patentanwäite Arabellastrasse 4, D-8000 München 81 (DE)**

(54) **DATENSPEICHERVORRICHTUNG.**

(57) Die Informationsspeichereinrichtung enthält einen Behälter (11) und mindestens zwei identische optische Informationsträger, die im Behälter (11) koaxial angeordnet und selbständig drehbar umeinander ausgeführt sind. Jeder Träger weist ein hohles zylindrisches Substrat (1 bis 3) aus einem für die Laserstrahlung durchsichtigen Werkstoff und eine auf das Substrat (1 bis 3) aufgetragene Aufzeichnungsschicht (5, 7, 9) auf.

## Gebiet der Technik

Die Erfindung betrifft Rechengeräte und bezieht sich insbesondere auf eine Informationsspeichereinrichtung.

## Stand der Technik

Es ist eine Informationsspeichereinrichtung bekannt, die einen zylindrischen Informationsträger mit einer Aufzeichnungsschicht enthält, in dessen Innerem ein Spiegel untergebracht ist (JP-B-53-2694).

Das Schreiben und Lesen einer Information auf den bzw. von dem zylindrischen Informationsträger erfolgt mit einem Laserstrahl unter Zuhilfenahme des im Inneren des Informationsträgers angeordneten Spiegels.

Als Nachteil dieser Einrichtung ist eine geringe räumliche Informationsaufzeichnungsdichte zu bezeichnen, die erstens dadurch bedingt ist, daß nur eine einzige Aufzeichnungsschicht benutzt wird, zweitens dadurch, daß die Aufzeichnungsschicht gegen Einflüsse der Umgebung ungeschützt bleibt, und drittens dadurch, daß der Durchmesser des zylindrischen Informationsträgers verhältnismäßig groß ist, weil im Inneren des letzteren eine Positioniereinrichtung angeordnet ist.

Bekannt ist ferner eine Informationsspeichereinrichtung, bei der der optische Informationsträger einen hohlen Zylinder, eine auf die Außenfläche des hohlen Zylinders aufgetragene Aufzeichnungsschicht und einen zweiten Zylinder enthält, der den ersten Zylinder umgibt und für die Laserstrahlung durchsichtig ist. Zwischen den Zylindern befinden sich zwei ringförmige Abdichtungselemente, welche einen zylindrischen geschlossenen Raum bilden, der an der Aufzeichnungsschicht anliegt (GB-B-1 580 398).

Die Verbindung zwischen den Zylindern hat einen zeitbedingten Charakter, weil ein Werkstoff benutzt ist, der die Entwicklung der Information nach deren Aufzeichnung auf der Aufzeichnungsschicht erfordert, wozu ein Zugang zum Werkstoff der Aufzeichnungsschicht notwendig ist.

Als Nachteil der zuletzt erwähnten Einrichtung ist eine geringe räumliche Informationsspeicherungsdichte festzustellen, die auf die Verwendung einer einzigen Auf-

zeichnungsschicht zurückzuführen ist, die keine Isolierung gegen die Umgebung hat und damit Verunreinigungen ausgesetzt werden kann, so daß die Oberflächen-Informationsspeicherungsdichte in der Aufzeichnungsschicht vermindert wird.

Offenbarung der Erfindung

Der Erfindung ist die Aufgabe zugrundegelegt, eine Informationsspeicherungseinrichtung zu schaffen, bei der durch Vergrößerung der Anzahl von Informationsträgern ohne wesentliche Änderung der geometrischen Abmessungen der Einrichtung die räumliche Informationsspeicherungsdichte erhöht wird.

Diese Aufgabe wird dadurch gelöst, daß die Informationsspeichereinrichtung, in deren Behälter einer erster optischer Informationsträger untergebracht ist, der drehbar ausgeführt ist und ein zylindrisches, für die Laserstrahlung durchsichtiges Substrat mit einer auf dieses aufgebrachten Aufzeichnungsschicht aufweist, gemäß der Erfindung mit mindestens einem weiteren optischen Informationsträger versehen ist, der identisch dem ersten ausgeführt und koaxial zum ersten optischen Informationsträger mit Möglichkeit einer selbständigen Drehung umeinander angeordnet ist.

Es ist zweckmäßig, den Behälter hermetisch auszuführen, um den Zwischenraum zwischen den zylindrischen Substraten der koaxial angeordneten Informationsträger zu verkleinern.

Jeder optische Informationsträger kann einen Feststeller aufweisen, der seine Drehung bei einer Drehung des anderen optischen Informationsträgers verhindert.

Es ist zweckdienlich, daß der Feststeller jedes optischen Informationsträgers einen Stift, der an einem Stirnende des Behälters befestigt ist und mit einer zugehörigen Bohrung, die in einem an der Stirnseite jedes zylindrischen Substrates angebrachten Verschlußstopfen ausgeführt ist, zusammenwirkt oder ein Ringelement aus magnetischem Werkstoff, das an der Stirnseite des zugehörigen zylindrischen Substrates befestigt ist, und einen jedem Ringelement zugeordneten ringförmigen Magneten enthält, der an dem am nächsten liegenden Stirnende des Behälters befestigt ist.

Um die Möglichkeit einer selbständigen Drehung jedes optischen Informationsträgers zu gewährleisten, ist es wünschenswert, daß jeder von ihnen einen elektrischen Drehantrieb aufweist, dessen Läufer an einer Stirnseite des zugehörigen zylindrischen Substrates befestigt ist, die demjenigen Stirnende gegenüberliegt, an dem der Feststeller angeordnet ist, und dessen Ständer am Behälter angebracht ist und allen elektrischen Antrieben gemeinsam ist.

Wird zum Informationsschreiben und lesen in der Informationsspeichereinrichtung ein Immersionsobjektiv angewandt, so wird zweckmäßigerweise jeder optische Informationsträger zwecks Informationsadressierung axial verschiebbar ausgeführt, wobei der Behälter mit einer Immersionsflüssigkeit gefüllt wird und seine Länge um mehr als das Zweifache die der Aufzeichnungsschicht eines jeden optischen Informationsträgers übersteigen muß.

Der Behälter kann aus einem für die Laserstrahlung undurchsichtigen Werkstoff hergestellt werden, während an der Stelle, die der Anordnung des dem Schreiben und Lesen der Information dienenden Objektivs entspricht, ein Fenster aus einem für die Laserstrahlung durchsichtigen Werkstoff vorgesehen werden kann.

Es ist von Vorteil, daß die Aufzeichnungsschicht eines jeden zylindrischen Substrates, das das Außensubstrat in bezug auf das nachfolgende darstellt, einen Querschnitt in Form eines geöffneten Ringes hat.

Die vorgeschlagene Ausführung der Informationsspeichereinrichtung ermöglicht eine Erhöhung der räumlichen Informationsspeicherungsdichte durch das Vorhandensein mehrer Aufzeichnungsschichten, die zueinander kompakt angeordnet sind.

Kurzbeschreibung der Zeichnungen

Im folgenden wird die Erfindung an Hand von Ausführungsbeispielen unter Bezugnahme auf die beigefügten Zeichnungen näher erläutert. Es zeigen:

Fig. 1 einen Längsschnitt einer erfindungsgemäßen Informationsspeichereinrichtung;

Fig. 2 einen Längsschnitt durch eine andere Ausführungsform der erfindungsgemäßen Informationsspeichereinrichtung (Gesamtansicht);

Fig. 3 einen Schnitt derselben Einrichtung entlang der Linie III-III in Fig. 2;

Bevorzugte Ausführungsform der Erfindung

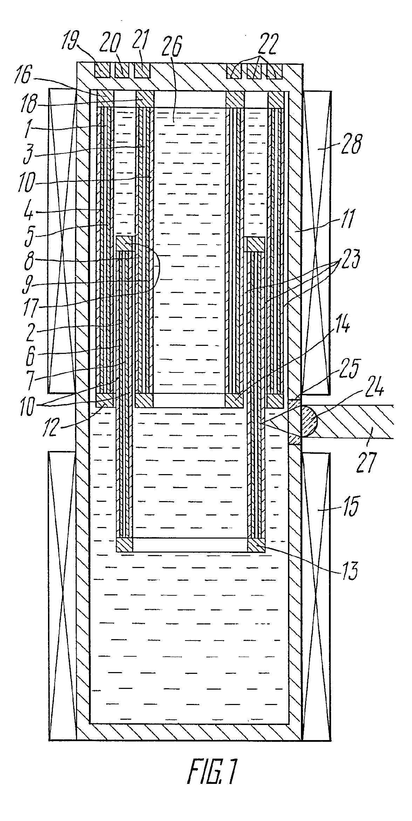

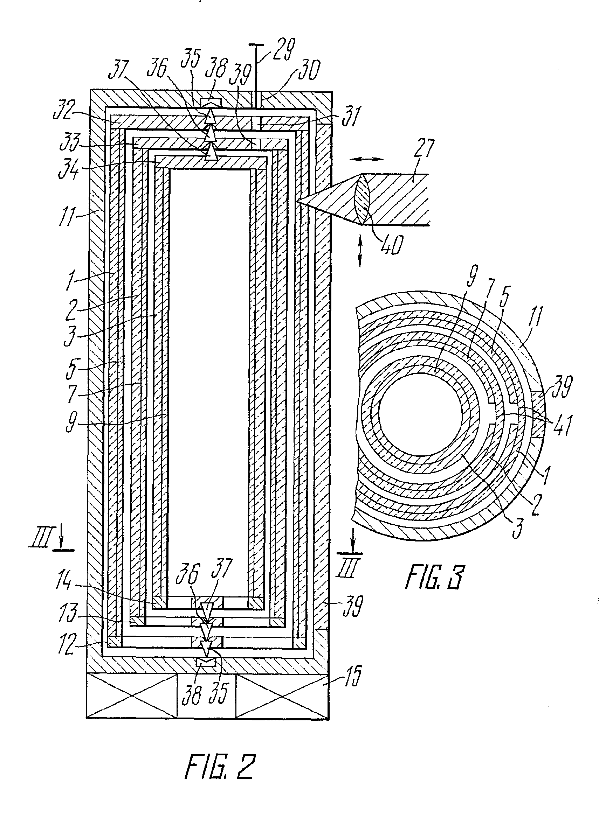

Die Informationsspeichereinrichtung enthält mehrere identische optische Informationsträger. In Fig. 1 und 2 sind Ausführungsformen der Einrichtung mit drei Informationsträgern gezeigt, jedoch kann ihre Anzahl auch größer sein, wobei die Anzahl solcher Informationsträger durch die Herstellungsbedingungen und die Technologiegerechtigkeit derselben bestimmt wird. Jeder Träger enthält ein hohles zylindrisches Substrat 1,2 bzw. 3, das aus einem für die Laserstrahlung durchsichtigen Werkstoff, z.B. Glas besteht. Auf jedes Substrat 1 bis 3 ist eine Aufzeichnungsschicht aufgebracht; in der in Fig. 1 dargestellten Ausführungsform sind die Schichten 4,5,6,7,8,9 auf die Außen- und Innenfläche des zugehörigen Substrates 1 bis 3 aufgetragen. Jede Aufzeichnungsschicht 4 bis 9 ist mit einem Überzug 10 geschützt.

Die zylindrischen Substrate 1 bis 3 sind koaxial im Inneren eines Behälters 11 mit Möglichkeit einer selbständigen Drehung umeinander angeordnet. Dazu sind sie mit einem eigenen elektrischen Antrieb versehen, der einen Läufer 12, 13 bzw. 14, der an der Stirnseite des zugehörigen Substrates 1 bis 3 befestigt und in Form eines radial magnetisierten Dauermagneten abwechselnder Richtung ausgeführt ist, und einen Ständer 15 enthält, der an der Außenseite des Behälters 11 angebracht ist, wie es in Fig. 1 gezeigt ist.

Zur Vereinfachung der Einrichtung ist der Ständer 15 gemeinsam für sämtliche elektrische Antriebe.

Um eine selbständige Drehung jedes Informationsträgers zu gewährleisten und die Drehung der übrigen Informationsträger zu verhindern, weist jeder Träger einen Feststeller auf. In der zu behandelnden Ausführungsform enthält jeder Feststeller ein Ringelement 16, 17 bzw. 18 aus magnetischem Werkstoff, das an der Stirnseite des zugehörigen Substrates 1,2 bzw. 3 befestigt ist, während an dem am nächsten liegenden Stirnende des Behälters 11 ein jeweiliger ringförmiger Magnet 19, 20 bzw. 21 angeordnet ist, der in Ringnuten 22 des Behälters 11 befestigt ist.

Um Zwischenräume 23 zwischen den Substraten 1 bis 3 zu verkleinern, wird der Behälter 11 hermetisch ausgeführt. Der Behälter 11 besteht aus einem Werkstoff, der für die Laserstrahlung undurchsichtig ist.

Die Ausführungsform der Einrichtung nach Fig. 1 wird mit einem zum Informationsschreiben und- lesen dienende Immersionsobjektiv 24 benutzt, welches einem in Behälter 11 ausgeführten Fenster 25 gegenüber angeordnet ist, das aus einem für die Laserstrahlung durchsichtigen Werkstoff, z.B. Glas ausgeführt ist. Den Hohlraum 26 des Behälters 11 füllt man mit einer Immersionsflüssigkeit.

Die optischen Informationsträger sind zwecks Informationsadressierung zueinander verschiebbar. In Fig. 1 ist gezeigt, daß der mittlere Informationsträger in bezug auf die übrigen Informationsträger herausgeschoben ist, um auf ihn eine Information schreiben zu können, die durch einen Strahlungsfluß 27 übertragen wird. Die axiale Verschiebung eines jeden Trägers kann von einem elektrischen Antrieb erfolgen, der dem obenbetrachteten elektrischen Drehantrieb analog ist, der als bewegliche Elemente die Ringe 16 bis 18 aus magnetischem Werkstoff (die in axialer Richtung magnetisiert sind) und als feststehendes Element den eigenen Ständer 28 benutzt. Hierbei hat der Behälter 11 eine Länge, die um mehr als das Zweifache die der beliebigen Aufzeichnungsschicht 4 bis 9 übersteigt.

Die betrachtete Einrichtung arbeitet wie folgt.

Das Positionieren erfolgt durch eine Verschiebung des optischen Informationsträgers entlang dessen Drehachse bei unbeweglichem Objektiv 24. Die Drehung und die axiale Verschiebung des zugehörigen optischen Informationsträgers wird durch dessen elektrische Antriebe vorgenommen.

Es werden aus dem Sichtfeld des Objektivs 24 mit Hilfe des elektrischen Antriebs zur axialen Verschiebung diejenigen Informationsträger vorher herausgeführt und in der Endstellung durch den zugehörigen ringförmigen Magneten 19, 20 bzw. 21 festgestellt, auf die und von denen kein Schreiben bzw. Lesen erfolgen muß. Im zu betrachtenden Beispiel dient als solcher Träger ein äußerer Träger auf dem Substrat 1, während das Schreiben auf das Substrat 2 des mittleren Trägers erfolgt. Muß das Schreiben (oder Lesen) einer Information auf das Substrat 3 des inneren Trägers bzw. von diesem erfolgen, so werden aus dem Sichtfeld des Objektivs 24 der äußere und der mittlere Träger herausgeführt (die als Außensubstrat in bezug auf den inneren, in Betrieb zum gegebenen Zeitpunkt befindlichen Träger angesehen werden).

Also wird nur einer (2) der drei Informationsträger positioniert, während die übrigen Informationsträger (1 und 3) durch die eigenen Feststeller fixiert werden, als welche ihre ringförmigen Magnete 19, 21 mit jeweiligen Elementen 16 bzw. 18 dienen, wie dies in Fig. 1 gezeigt ist.

In Fig. 2 und 3 eine weitere Ausführungsform der Informationsspeichereinrichtung mit koaxial angeordneten optischen Informationsträgern dargestellt, deren jeder ein hohles zylindrisches Substrat 1,2 bzw. 3 mit Aufzeichnungsschichten 5, 7 bzw. 9 auf deren Innenfläche aufweist.

Der am Stirnende des Behälters 11 befestigte Stift 29 wird durch Bohrungen 30, 30' und 31 hindurchgeführt und bildet mit diesen Feststeller für die Informationsträger (Substrate 1 bis 3)

Auf einer Stirnseite jedes Substrats 1 bis 3 sind Verschlußstopfen 32, 33, 34 angeordnet, wobei in den Verschlußstopfen 32, 33 und am Stirnende des Behälters 11 die erwähnten Bohrungen 30, 30', 31 ausgeführt sind.

Außerdem weisen jedes Substrat 1,2 bzw. 3 Lagerungen 35, 36, 37 auf, die mit Lagern 38 zusammenarbeiten, die im Behälter 11 montiert sind.

Die elektrischen Drehantriebe der Informationsträger 1 bis 3 sind analog denjenigen ausgeführt, die in der vorhergehenden Ausführungsform (Fig. 1) betrachtet wurden, nur mit dem Unterschied, daß ihre Läufer 12 bis 14 an einem Stirnende des Behälters 11 angebracht sind, das dem Stirnende gegenüberliegt, an dem der Stift 29 der Feststeller befestigt ist.

In der Seitenwand des Behälters 11 ist ein Fenster 39 aus einem Material vorhanden, das für die Laserstrahlung durchsichtig ist. Gegenüber dem Fenster 39 ist ein bewegliches Objektiv 40 angeordnet, durch dessen Verschiebung längs seiner Achse die Fokussierung und durch dessen Bewegung quer zur Achse des Objektivs 40 längs der Erzeugende der optischen Informationsträger das Positionieren bewirkt wird.

Die Aufzeichnungsschichten 5 und 7 (Fig. 3) sind auf die Innenflächen der jeweiligen Substrate so aufgetragen, daß es Abschnitte 41 der Oberfläche gibt, welche mit keiner Aufzeichnungsschicht 5 oder 7 belegt sind und Fenster bilden, die für die Laserstrahlung durchsichtig sind, d.h. ihr Querschnitt hat die Form eines geöffneten Ringes. Die Feststeller der Substrate 1 und 2 sorgen dafür, daß die Abschnitte 4I gegenüber dem Fenster 39 in der Wand des Behälters 11 liegen.

Die Informationsspeichereinrichtung nach Fig. 2 und 3 funktioniert folgenderweise. Entsprechend der Zeichnung erfolgt das Schreiben (oder Lesen) einer Information auf den inneren Träger bzw. von diesem. Dabei sind die Substrate 1 und 2 der anderen Träger so angeordnet, daß ihre von der Aufzeichnungsschicht 5 bzw. 7 freien Abschnitte 41 gegenüber dem Fenster 39 in der Wand des Behälters 11 liegen. Der Stift 29 befindet sich in den Bohrungen 30, 30', 31 und verhindert die Drehung der Substrate 1 und 2. Das Substrat 3 wird beim Schreiben (oder Lesen) durch den eigenen elektrischen Antrieb mit Läufer 14 und Ständer 15 gedreht.

00292578

Beim Positionieren des auf dem Substrat 2 ausgeführten Informationsträgers ist der Stift 29 in den Bohrungen 30 und 31 untergebracht, wobei der Abschnitt 41 der Aufzeichnungsschicht 5 gegenüber dem Fenster 39 in der Wand des Behälters 11 angeordnet wird.

Die behandelte Einrichtung weist eine hohe räumliche Schreib- und Speicherungsdichte auf, wodurch die Kapazität dieser Einrichtung 1G Byte bei deren folgender Abmessungen erreicht: einer Dicke jedes Substrates von 0,5 bis 1 mm, einem Innendurchmesser des Substrates des inneren Trägers von 12 bis 17 mm, einem Innendurchmesser des äußeren Trägers von 17 bis 22 mm, einer Länge jedes Trägers von 100 bis 150 mm.

Gewerbliche Anwendbarkeit

Die Erfindung kann in externen Speichern elektronischer Rechner, z.B. bei der Organisation von Datenbanken verwendet werden.

- 9 -

00292578

PATENTANSPRÜCHE

1. Informationsspeichereinrichtung, in deren Behälter (11) ein erster optischer Informationsträger untergebracht ist, der drehbar ausgeführt ist und ein zylindrisches, für die Laserstrahlung durchsichtiges Substrat (1) mit einer auf dieses aufgebrachten Aufzeichnungsschicht (5) aufweist, dadurch gekennzeichnet, daß sie mit mindestens einem weiteren optischen Informationsträger versehen ist, der indentisch dem ersten ausgeführt und koaxial zum ersten optischen Informationsträger mit Möglichkeit einer selbständigen Drehung umeinander angeordnet ist.

2. Einrichtung nach Anspruch 1, dadurch gekennzeichnet, daß der Behälter (11) hermetisch zur Verringerung des Zwischenraumes zwischen den zylindrischen Substrate (1 bis 3) der koaxial angeordneten optischen Informationsträger ausgeführt ist.

3. Einrichtung nach Anspruch 1 oder 2, dadurch gekennzeichnet, daß jeder optische Informationsträger einen Feststeller aufweist, der seine Drehung bei einer Drehung des anderen optischen Informationsträgers verhindert.

4. Einrichtung nach Anspruch 3, dadurch gekennzeichnet, daß der Feststeller jedes optischen Informationsträgers einen Stift (29) enthält, der an dem Stirnende des Behälters (11) befestigt ist und mit einer zugehörigen Bohrung (30 bis 32), die in einem an der Stirnseite jedes zylindrischen Substrates (1 bis 3) angebrachten Verschlußstopfen (32 bis 34) ausgeführt ist, zusammenwirkt.

5. Einrichtung nach Anspruch 3, dadurch gekennzeichnet, daß der Feststeller jedes Informationsträgers ein Ringelement (16 bis 18) aus magnetischem Werkstoff, das an der Stirnseite des zugehörigen zylindrischen Substrates (1 bis 3) befestigt ist, und einen jedem Ringelement (16 bis 18) zugeordneten ringförmigen Magneten (19 bis 21) enthält, der an dem am nächsten liegenden Stirnende des Behälters (11) befestigt ist.

6. Einrichtung nach einem der Ansprüche 2 bis 5, dadurch gekennzeichnet, daß zur Gewährleistung der Möglichkeit einer selbständigen Drehung jedes optischen In-

- 10 -    00292578

formationsträgers jeder Träger einen elektrischen Drehantrieb aufweist, dessen Läufer (12 bis 14) an einer Stirnseite des zugehörigen zylindrischen Substrates(1 bis 3) befestigt ist, die demjenigen Stirnende gegenüberliegt, an dem der Feststeller angeordnet ist, und dessen Ständer (15) am Behälter (11) angebracht ist und sämtlichen elektrischen Antrieben gemeinsam ist.

7. Einrichtung nach Anspruch 1, die mit einem zum Schreiben und Lesen einer Information dienenden Immersionsobjektiv (24) angewendet wird, dadurch gekennzeichnet, daß jeder optische Informationsträger zur Informationsadressierung axial verschiebbar ausgeführt ist, während der Behälter(11) mit einer Immersionsflüssigkeit gefüllt ist und eine Länge hat, die um mehr als das Zweifache größer ist als die der Aufzeichnungsschicht (4 bis 9) eines jeden optischen Informationsträgers.

8. Einrichtung nach Anspruch 7, dadurch gekennzeichnet, daß der Behälter (11) aus einem für die Laserstrahlung undurchsichtigen Werkstoff hergestellt ist, und an der Stelle, die der Anordnung des zum Informationsschreiben oder-lesen dienenden Objektivs (24) entspricht, im Behälter (11) ein Fenster (26) aus einem für die Laserstrahlung durchsichtigen Werkstoff ausgeführt ist.

9. Einrichtung nach Ansprüchen 1 bis 5, dadurch gekennzeichnet, daß die Aufzeichnungsschicht (4 bis 9) jedes zylindrischen Substrates (1 bis 3), das das Außensubstrat (1) in bezug auf das nachfolgende Substrat (2) ist, einen Querschnitt in Form eines geöffneten Ringes hat.

10. Einrichtung nach Anspruch 6 dadurch gekennzeichnet, daß die Aufzeichnungsschicht (4 bis 9) jedes zylindrischen Substrates (1 bis 3), das als Außensubstrat (1) in bezug auf das nachfolgende Substrat (2) angesehen wird, einen Querschnitt in Form eines geöffneten Ringes hat.

00292578

*FIG.1*

00292578

FIG. 2

FIG. 3

00292578

INTERNATIONAL SEARCH REPORT

International Application No PCT/SU87/00119

## I. CLASSIFICATION OF SUBJECT MATTER (if several classification symbols apply, indicate all) 6

According to International Patent Classification (IPC) or to both National Classification and IPC

IPC$^4$ - G II B 7/24

## II. FIELDS SEARCHED

### Minimum Documentation Searched 7

| Classification System | Classification Symbols |
|---|---|
| IPC$^4$ | G II B 7/00, 7/24, 25/02 |

Documentation Searched other than Minimum Documentation
to the Extent that such Documents are Included in the Fields Searched 8

## III. DOCUMENTS CONSIDERED TO BE RELEVANT 9

| Category * | Citation of Document, 11 with indication, where appropriate, of the relevant passages 12 | Relevant to Claim No. 13 |
|---|---|---|
| A | EP,A1,0166199,(VICTOR COMPANY OF JAPAN, LIMITED),02 January 1986 (02.01.86),see fig. 1 | 1,7 |
| A | GB,A,1482668,(GEORGE OLATOKNUBO OKIKIOLU), 10 August 1977 (10.08.77),see fig.2 | 1-10 |
| A | US,A,4535434(Sony Corporation),13 August 1985 (13.08.85),see the abstract | 1,2,8 |

* Special categories of cited documents: 10

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art.

"&" document member of the same patent family

## IV. CERTIFICATION

| Date of the Actual Completion of the International Search | Date of Mailing of this International Search Report |
|---|---|
| 26 January 1988 (26.01.88) | 10 March 1988 (10.03.88) |

| International Searching Authority | Signature of Authorized Officer |
|---|---|
| ISA/SU | |

Form PCT/ISA/210 (second sheet) (January 1985)